# EUROPEAN PATENT APPLICATION

(11) **EP 1 693 994 A1**
(43) Date of publication of application: **23.08.2006**
(21) Application number: 06250540.9
(22) Date of filing: 01.02.2006
(51) Int. Cl.: H04L 12/28, H04L 29/06

(54) **Combining multiple physical traffic channels in a wireless communication system**

(30) Priority: 16.02.2005 US 59247
(71) Applicant: LUCENT TECHNOLOGIES INC., Murray Hill, New Jersey 07974-0636 (US)
(72) Inventor: Qi, Bi, Morris Plains, NJ 07950 (US); Ahmed, A. Tarraf, Bayonne, NJ 07002 (US); Xin, Wang, Parsippany, NJ 07054 (US); Yang, Yang, Parsippany, NJ 07054 (US)
(74) Representative: Cockayne, Gillian

(57) **Abstract**

A wireless communication system (20) allows communications between a mobile station (22) and a wireless network (24) over combined physical traffic channels (44, 46). In a disclosed example, a mobile station (22) has multiple wireless access terminals (40, 42) for transmitting different portions of a communication over multiple physical traffic channels (44, 46). In a disclosed example, each wireless access terminal (40, 42) utilizes one of the channels (44, 46). A known multilink PPP protocol facilitates splitting a communication into portions to be communicated over the combined physical traffic channels (44, 46) and then recombined at the mobile station (22) or an appropriate portion of the network (24). With a disclosed example, the achievable throughput using combined physical traffic channels (44, 46) approaches the aggregate or sum of the individual channel throughput capacities.

## Description

### Field of the Invention

This invention generally relates to telecommunications. More particularly, this invention relates to wireless communication systems.

### Description of the Related Art

Wireless communication systems are well known and in widespread use. The most common use of such systems is for voice communications using cell phones. More recently, uses of such systems for data communications, video communications and combinations of voice, data and video have grown in popularity. As wireless service providers increase their capabilities, there are increasing demands for such services.

One challenge facing wireless service providers is continuously upgrading the capacity and capability of their systems. Those skilled in the art are always striving to find ways to provide enhanced services or new services. Various improvements have been made in this area. For example, different signaling techniques and channel configurations have been proposed for increasing bandwidth and throughput.

Every wireless technology has a limit on the achievable throughput based on the design of the system. Once a wireless communication system is deployed, there is effectively a hard cap on the achievable user throughput performance. For example, some EVDO systems typically support up to a 153.6 Kbps channel rate along the reverse link (i.e., from a mobile station to a base station). For situations where a higher throughput performance is desired, the wireless communication system must be upgraded or replaced with an advanced technology capable of supporting the higher throughput. Such upgrade or replacement processes are expensive and, in many cases, not feasible.

One instance where higher throughput capacity is required is to support wireless data access technologies. Certain data applications or programs, for example, are not useful with existing wireless communication systems because the throughput available with those systems is not adequate to support data communications using such an application.

There is a need for increasing the throughput capacity of wireless communication systems in an economical manner without requiring a complete replacement or redesign of an existing system. This invention addresses that need.

### SUMMARY OF THE INVENTION

An exemplary disclosed method of communicating between a wireless network and a mobile station having a plurality of wireless access terminals includes using a physical traffic channel for each of the terminals and transmitting a first portion of a communication using one of the physical traffic channels and a second portion of the communication using another one of the physical traffic channels. Using more than one traffic channel for a single communication between the wireless network and the mobile station increases the available throughput, which enables wireless communications for a wider variety of data applications.

One example includes providing an indication with the transmission of each of the first and second portions of the communication that indicates a relationship between the portions. A receiver of the communication over the plurality of physical traffic channels interprets the indication and combines the portions of the communication from each channel for handling the communication as it was intended to be.

In one example, each of the physical traffic channels has a throughput and the method includes achieving an aggregate transmission throughput for the communication over the combined channels that corresponds to a sum of the two channel throughputs. In many examples, the aggregate transmission throughput is less than a numerical sum of the throughputs of the individual traffic channels.

The various features and advantages of this invention will become apparent to those skilled in the art from the following detailed description. The drawings that accompany the detailed description can be briefly described as follows.

### BRIEF DESCRIPTION OF THE DRAWINGS

Figure 1 schematically illustrates selected portions of a wireless communication system utilizing traffic channels in a manner designed according to an embodiment of this invention.

Figure 2 schematically illustrates the operation of selected portions of the embodiment of Figure 1.

Figure 3 schematically illustrates a signaling strategy used in one example embodiment.

### DETAILED DESCRIPTION

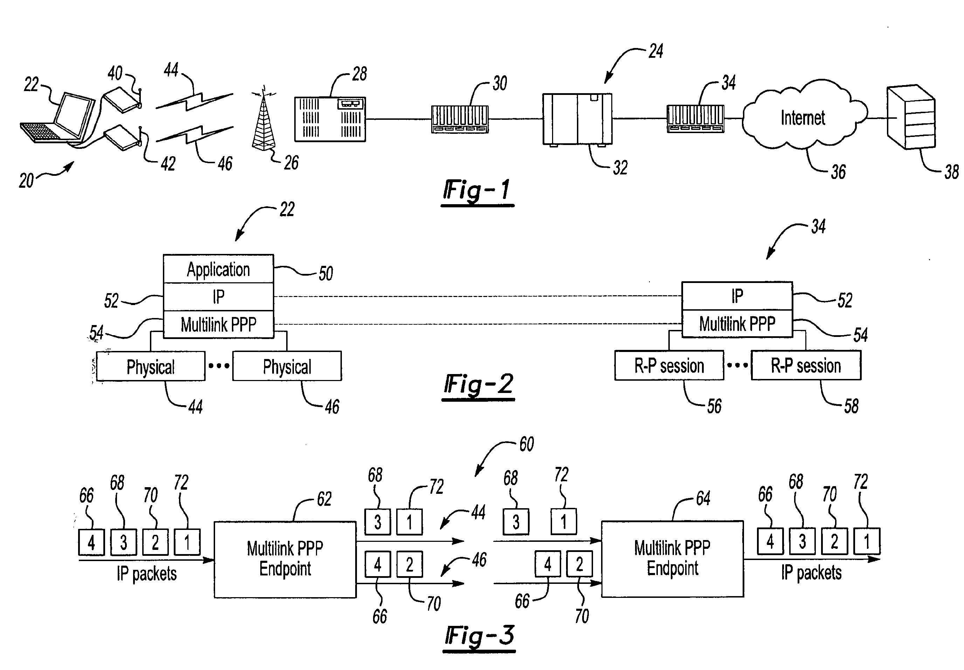

Figure 1 schematically shows selected portions of a wireless communication system 20. A mobile station 22 communicates with a wireless network 24. The illustrated example includes known components of a wireless network such as a base station antenna 26, base station transceiver 28, a router 30, a radio network controller 32 and a packet data serving node (PDSN) 34. In this example, the wireless network 24 is capable of communicating over an internet connection 36 with one or more remotely located devices such as a software application server 38.

In the illustrated example, the mobile station 22 can communicate with the application server 38 for accomplishing a variety of data communications. The illustrated example is well suited to handling situations where high data throughput is required for adequate application performance. The illustrated mobile station 22 includes a plurality of wireless access terminals 40, 42. In one example, the mobile station 22 comprises a notebook computer and the wireless access terminals 40 and 42 comprise commercially available air cards. One example wireless access terminal is known as the AirPrime 5220 PCMCIA EVDO air card. A variety of known techniques for coupling the wireless access terminals to the mobile station 22 can be used. In one example, the mobile station 22 already has more than one wireless access terminal. In another example, the terminals are selectively connected to the mobile station when desired.

Each wireless access terminal 40, 42 communicates over a physical traffic channel with the base station 26. In the illustrated example, the wireless access terminal 40 communicates over a first physical traffic channel 44 while the wireless access terminal 42 communicates over a second physical traffic channel 46. Each of the physical traffic channels carries at least one of voice or data packets, for example. Each of the physical traffic channels has a throughput capacity or bandwidth. In the illustrated example, combining the two physical traffic channels 44 and 46 into a single logical channel and using them at least partially simultaneously for transmitting a communication between the mobile station 22 and the base station 26 provides increased throughput capacity.

In one example, each physical traffic channel has a throughput rating of 153.6 Kbps. With the example arrangement, using the two wireless access terminals 40 and 42 and the combined physical traffic channels 44 and 46 (one channel per wireless access device) provides an aggregate throughput of approximately 289 Kbps for an FTP upload communication, for example. This example includes using the 1x EV-DO communication standard and appropriately configured wireless access terminals 40 and 42. Other communication standards or protocols are useful with this invention. EV-DO is provided as an example for discussion purposes. In one example, a different protocol is used on each of the channels 44 and 46.

With the combined physical traffic channels 44 and 46, the mobile station 22 is capable of communicating at a higher throughput than the communication system 20 otherwise would be able to provide. This example does not require altering the channels 44 or 46 in any manner and does not require altering the wireless network 24. One difference between the example wireless network 24 and some typical wireless networks is that the PDSN 34 is capable of handling the communications over the combined physical traffic channels by establishing corresponding R-P sessions for each of the combined channels.

It is important to recognize the difference between a physical traffic channel and a physical control channel. It is known to use a physical control channel (PDCCH) in combination with a physical traffic or data channel (PDDCH), for example. Such a combination does not increase the throughput of data or other traffic (i.e., a communication) on the data channel PDDCH. With the disclosed example embodiment of this invention, the combined physical traffic channels operate as if they were a single logical channel and provide an increased throughput that may be almost twice that of one of the physical channels, for example.

In one example, a known multilink PPP protocol is used for combining the physical traffic channels 44 and 46. As schematically shown in Figure 2, an appropriate application 50 running on the mobile station 22 utilizes internet protocol communication 52 and a known multilink PPP protocol 54. The multiple physical channels 44, 46 are used in combination with the multilink PPP protocol 54, which is responsible for effectively splitting the IP packet stream of the communication into multiple physical channels at the mobile station side. The PDSN 34 utilizes the multilink PPP protocol 54 to establish a number of R-P sessions corresponding to the number of combined channels.

In this example, the multilink PPP protocol resides over the corresponding R-P sessions at the interface between the radio network controller 32 and the PDSN 34. On the network side, the multilink PPP protocol 54 is responsible for recombining the split IP packet stream back into a single IP packet stream corresponding to the original communication (i.e., before being split using the multilink PPP protocol) from the mobile station 22.

Any application 50 that is run on top of the IP protocol 52 is unaffected by the multilink PPP protocol 54 and the multiple physical channels 44, 46. At the same time, however, the application 50 obtains an aggregate bandwidth or throughput from the combined physical traffic channels.

One example uses a multilink PPP protocol as described in IETF RFC 1990. Referring to Figure 3, a multilink bundle is set up during the LCP negotiation phase of a communication. The bundle is identified by the end point discriminators 62 and 64, which correspond to the mobile station 22 and the PDSN 34 in the example of Figure 1. It should be noted that the flow of communication shown in Figure 3 could apply to an uplink or a downlink directed communication. Therefore the end points 62 and 64 need not be considered as being associated with a particular one of the mobile station or the packet data serving node.

In one example, additional member links can join the bundle using LCP messages in a known manner by indicating an appropriate end point discriminator. Each member link setup also triggers establishment of corresponding physical traffic channels. Each member link can be released individually using LCP messages in a known manner. Alternatively, a bundle could be released as a whole.

No separate IPCP negotiation is required for each member link. The multilink bundle has unique IP protocol settings such as IP address, DNS address, etc. Once the multilink bundle is set up, the multilink PPP protocol adds a header in addition to the known PPP overhead to the packet, which includes a new protocol ID, a fragmentation indication and sequence numbers. These are used so that the end point on the receiving end can reassemble and resequence packets transmitted over a plurality of combined physical traffic channels.

As schematically shown in Figure 3, a communication includes a plurality of IP packets 66, 68, 70 and 72. The end point discriminator 62 at the sending end effectively splits up the communication and allocates some of the packets (i.e., a first portion) to one of the physical traffic channels and remaining packets (i.e., a second portion of the communication) to another channel. In the illustrated example, the packets 68 and 72 are transmitted along the physical traffic channel 44 while the packets 66 and 70 are transmitted along the physical traffic channel 46. The packets are then eventually received by the end point discriminator 62 which then uses the identifier information including the fragmentation indication and the sequence information to recombine the received packets into a single communication as shown on the right of Figure 3.

Although the illustrated examples include two physical traffic channels, more than two could be used in an implementation of this invention. Effectively combining physical traffic channels into a single logical channel provides increased throughput capabilities so that a wider variety of data applications can be used with a wireless communication network.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A method of communicating between a mobile station having a plurality of wireless access terminals and a wireless network, comprising:
transmitting a first portion of a communication between the mobile station and the wireless network on a first physical traffic channel associated with a first one of the wireless access terminals; and
transmitting a second portion of the communication on a second physical traffic channel associated with a second one of the wireless access terminals.

2. The method of claim 1, comprising providing an indication with the transmission of each of the first and second portions of the communication that indicates a relationship between the portions.

3. The method of claim 1, comprising providing an identification of a protocol used for the transmissions, a fragmentation indication and a sequence identifier with the transmission of each of the portions of the communication.

4. The method of claim 1, comprising using a multilink PPP protocol for associating the first and second portions of the communication.

5. The method of claim 1, comprising simultaneously transmitting the first and second portions of the communication on each of the physical traffic channels.

6. The method of claim 1, wherein each of the physical traffic channels has a throughput and comprising achieving an aggregate transmission throughput for the communication over the first and second physical traffic channels that corresponds to a sum of the physical traffic channel throughputs.

7. The method of claim 1, comprising directing the communication to a single termination point in the wireless network.

8. The method of claim 1, comprising using a single address for the mobile station such that the single address corresponds to an entire plurality of links associated with the wireless access terminals.

9. The method of claim 1, comprising using a first communication protocol over the first physical traffic channel and a second communication protocol over the second physical traffic channel.

10. A mobile station comprising:
a plurality of wireless access terminals for communicating on a corresponding plurality of physical traffic channels such that the mobile station communicates a first portion of a communication using a first one of the wireless access terminals and a first one of the physical traffic channels and at least one other portion of the communication using a second one of the wireless access terminals and a second one of the physical traffic channels.
